# EUROPÄISCHE PATENTSCHRIFT

(11) **EP 0 781 462 B1**
(45) Veröffentlichungstag und Bekanntmachung des Hinweises auf die Patenterteilung: **18.06.2003**
(21) Anmeldenummer: 96905750.4
(22) Anmeldetag: 19.03.1996
(51) Int. Cl.: H01R 13/66, H01R 13/533, G01N 27/407

(54) **MESSEINRICHTUNG**
MEASURING DEVICE
DISPOSITIF DE MESURE

(30) Priorität: 12.07.1995 DE 19526821
(43) Veröffentlichungstag der Anmeldung: 02.07.1997
(73) Patentinhaber: ROBERT BOSCH GMBH, 70442 Stuttgart (DE)
(72) Erfinder: GRASER, Theodor, D-70191 Stuttgart (DE); HOETZEL, Gerhard, D-70376 Stuttgart (DE); WEHRMANN, Johann, D-70184 Stuttgart (DE); EISENSCHMID, Heinz, D-85139 Wettstetten (DE)
(86) Internationale Anmeldenummer: DE9600484
(87) Internationale Veröffentlichungsnummer: WO97003483

(56) Entgegenhaltungen:
- EP-A- 0 624 790
- DE-A- 3 410 122
- US-A- 4 151 503
- US-A- 4 452 687
- US-A- 4 560 463

## Beschreibung

Die Erfindung betrifft eine Meßeinrichtung, insbesondere elektrochemischen Meßfühler mit den im Oberbegriff des Anspruchs 1 genannten Merkmalen.

### Stand der Technik

Meßeinrichtungen der gattungsgemäßen Art sind bekannt. So werden beispielsweise in einer sogenannten Fingerbauform ausgebildete elektrochemische Meßfühler in Kraftfahrzeugen zur Bestimmung des Sauerstoffgehaltes in Abgasen von Verbrennungsmotoren eingesetzt. Diese Meßeinrichtungen besitzen ein unmittelbar an einer Meßstelle angeordnetes Sensorelement, daß in einem metallischen Gehäuse dicht festgelegt ist.

Das Sensorelement weist bekanntermaßen ein zwischen zwei Elektroden angeordneten Festkörperelektrolyten auf. Je nach Ausstattung des Sensorelementes ist eine zusätzliche Heizeinrichtung vorgesehen. Um die mit dem Sensorelement ermittelten Sensorsignale auszuwerten, beziehungsweise dem Sensorelement die notwendige Heizspannung zuzuführen, sind elektrische Verbindungsleitungen vorgesehen, die das Sensorelement mit einer entsprechenden Schaltungsanordnung verbinden.

Da die Sensorelemente, beispielsweise beim Messen des Sauerstoffgehaltes in Abgasen in einem Bereich angeordnet sind, der mit einer relativ hohen Temperatur beaufschlagt wird, ist es bekannt, die elektrischen Verbindungsleitungen zumindest in der Nähe der Meßeinrichtung geschützt zu führen. Hierzu ist es bekannt, die elektrischen Verbindungsleitungen in einem Metallrohr zu führen, das in einem bestimmten Abstand zu der Meßstelle endet. Um die Verbindung des Sensorelementes mit der Auswerteschaltung zu realisieren, werden an das Ende der im Metallrohr geführten Leitungen kunststoffisolierte Leitungen, meist PTFE-isoliert, angeschlagen. Die kunsstoffisolierten Leitungen sind an ihrem anderen Ende mit einer Steckvorrichtung versehen, die mit einer am Kabelbaum befindlichen Gegensteckvorrichtung kontaktiert werden kann.

Die Verbindung zwischen den kunststoffisolierten und den sich im Metallrohr befindlichen Leitungen wird bekanntermaßen als unlösbare Schweiß-, Crimpund/oder Lötverbindung ausgeführt. Um die Betriebssicherheit dieser Verbindungsstelle zu gewährleisten, ist bekannt, diese mit Kunststoff zu umspritzen und die kunststoffisolierten Leitungen zusätzlich mit Gummitüllen abzudichten. Nachteilig an dieser Lösung ist, daß der mit der Meßeinrichtung verbundene Kabelbaum der elektrischen Verbindungsleitungen relativ lang ist, beispielsweise bis zu zwei Metern, so daß eine relativ aufwendige Verlegung im Kraftfahrzeug notwendig ist.

Aus der EP 0 624 790 A1 worauf der Oberbegriff des Anspruchs 1 basiert ist ein Gasmeßfühler mit einem Sensorelement bekannt, das in einem Gehäuse angeordnet ist. Das Sensorelement ist über elektrische Verbindungsleitungen mit einer meßstellenfernen Auswerteschaltung verbunden. Die Verbindungsleitungen sind innerhalb des Gehäuses in der Nähe der Meßstelle gegen Hochtemperatureinflüsse geschützt geführt. Die Verbindungsleitungen bilden an dem einen Ende des Gehäuses eine Kontaktierungseinrichtung, auf die ein Gegenstecker aufsteckbar ist.

Das Dokument US 4,560,463 beschreibt eine Meßeinrichtung mit einem in einem Gehäuse angeordneten Sensorelement, das über elektrische Verbindungsleitungen mit einer meßstellenfernen Auswerteschaltung verbindbar ist. Direkt an das Gehäuse schließt sich eine elektrische Leitung an. Eine ähnliche Meßeinrichtung wird in der DE 34 10 122 A1 beschrieben.

Aus der US 4,151,503 ist eine Meßeinrichtung bekannt, bei der ein Sensorelement in einem keramischen Gehäuse angeordnet ist. In das keramische Gehäuse sind Kontaktstifte eingeklebt oder eingekittet, die mit dem Sensorelement elektrisch verbunden sind.

### Vorteile der Erfindung

Die erfindungsgemäße Meßeinrichtung mit den im Anspruch 1 genannten Merkmalen bietet demgegenüber den Vorteil, dass in einfacher Weise kleinbauende, hochtemperaturbelastbare Meßeinrichtungen ohne großen Aufwand sicher mit einer zu einer Auswerteschaltung führenden Verbindung kontaktiert werden können. Dadurch, daß eine die elektrischen Verbindungsleitungen aufnehmende Schutzeinrichtung an ihrer dem Sensorelement abgewandten Ende eine Kontaktierungseinrichtung aufweist, die mit einer Verbindungsleitung zu der Auswertschaltung kontaktierbar ist, ist es vorteilhaft möglich, die Verbindung zwischen der Meßeinrichtung und der Auswerteschaltung unmittelbar am meßstellenfernen Ende der Meßeinrichtung durchzuführen, ohne daß eine zusätzliche Anordnung beziehungsweise Herstellung einer Schnittstelle notwendig wird. Die Verwendung einer Metallmantelleitung als Schutzeinrichtung hat den Vorteil, daß eine Metallmantelleitung zumindest innerhalb gewisser Grenzen biegbar ist. Dadurch ist es möglich, die Metallmantelleitung an die jeweiligen Platzverhältnisse am Einbauort der Meßeinrichtung anzupassen.

Indem die Meßeinrichtung unmittelbar die Kontaktierungseinrichtung aufweist, kann diese sehr kompakt gebaut sein, so daß eine vereinfachte Montage, beispielsweise im Motorraum eines Kraftfahrzeuges, möglich wird. Darüber hinaus ist es vorteilhaft möglich, über die mit der Meßeinrichtung, insbesondere der Schutzeinrichtung der Meßeinrichtung unmittelbar verbundene Kontaktierungseinrichtung eine einheitliche Schnittstelle zu den Verbindungsleitungen zu der Auswerteschaltung zu schaffen, so daß insgesamt eine Meßeinrichtung geschaffen ist, die bei einer Vielzahl unterschiedlicher Kraftfahrzeuge einsetzbar ist.

Weitere vorteilhafte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Schnittdarstellung einer erfindungsgemäße Meßeinrichtung und
- Figur 2: eine Draufsicht auf eine Kontaktierungseinrichtung der Meßeinrichtung.

### Beschreibung des Ausführungsbeispiels

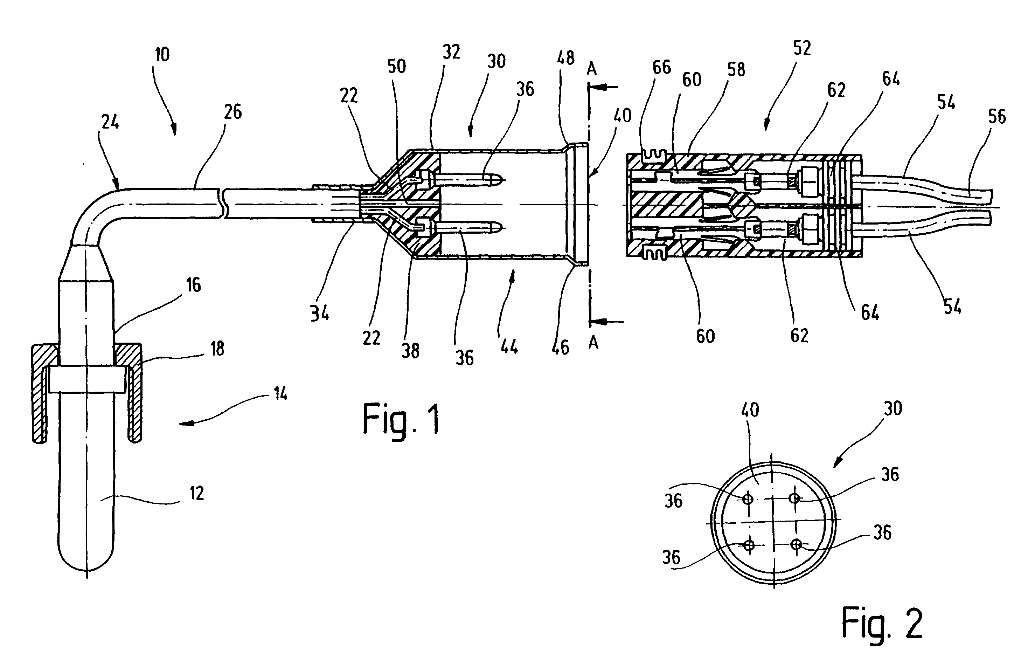

Figur 1 zeigt in einer teilweise aufgeschnittenen Darstellung eine insgesamt mit 10 bezeichnete Meßeinrichtung. Die Meßeinrichtung 10 weist ein Sensorelement 12 auf. Das Sensorelement 12 kann an sich jedes beliebige Sensorelement zum Messen einer physikalischen Größe sein. Im gezeigten Beispiel wird davon ausgegangen, daß es sich bei dem Sensorelement 12 um einen elektrochemischen Meßfühler 14, eine sogenannte Lambdasonde, handelt. Das Sensorelement 12 besitzt ein im wesentlichen fingerförmig ausgebildetes Gehäuse 16, daß in einem nicht dargestelltem Abgasrohr befestigbar ist. Das Gehäuse 16 ist durch eine Durchgangsöffnung des Abgasrohres geführt und mit entsprechenden Befestigungsmitteln, beispielsweise einer Überwurfmutter 18 arretiert. Die Befestigung des Gehäuses 16 erfolgt so, daß dieses dichtend in der Durchgangsöffnung angeordnet ist.

Innerhalb des Gehäuses 16 sind hier nicht dargestellte Elektroden, ein Festkörperelektrolyt sowie eine Heizeinrichtung angeordnet, mittels denen in hier nicht näher zu betrachtender Weise eine Sauerstoffkonzentration in einem Abgas eines Kraftfahrzeuges meßbar ist. Die Elektroden und die Heizeinrichtung sind über elektrische Verbindungsleitungen 22 aus dem Gehäuse 16 des Sensorelementes 12 herausgeführt. Im Beispiel wird davon ausgegangen, daß insgesamt vier Verbindungsleitungen 22 vorgesehen sind. Nach weiteren, nicht dargestellten Ausführungsbeispielen, kann jedoch die Anzahl der Verbindungsleitungen entsprechend der Ausstattung des Sensorelementes 12 variieren, das heißt, die Anzahl kann größer oder kleiner als vier sein.

Die Verbindungsleitungen 22 dienen einerseits zum Abgreifen von Sensorsignalen und andererseits zum Bereitstellen einer Heizspannung.

An das Gehäuse 16 des Sensorelementes 12 schließt sich eine Schutzeinrichtung 24 für die Verbindungsleitungen 22 an. Die Schutzeinrichtung 24 kann beispielsweise eine Metallmantelleitung 26 sein, innerhalb der die Verbindungsleitungen 22 geführt sind. Die Metallmantelleitung 26 ist dichtend mit dem Gehäuse 16 des Sensorelementes 12 verbunden, so daß äußere Einflüsse, beispielsweise Verschmutzungen, Kraftstoffgase, Luft oder Hitze nicht unkontrolliert in das Gehäuse 16 gelangen können. Da das Sensorelement 12 in der Regel in einem Bereich angeordnet ist, in dem erhöhte Temperaturen, beispielsweise von mereren 100°C herrschen, bildet die Metallmantelleitung 26 einen Schutz für die elektrischen Verbindungsleitungen 22 vor einer unzulässigen Erwärmung.

An dem, dem Sensorelement 12 abgewandten Ende 28 der Metallmantelleitung 26 ist eine Kontaktierungseinrichtung 30 angeordnet, die gemeinsam mit dem Sensorelement 12 , der Schutzeinrichtung 24 eine die Meßeinrichtung 10 ergebende Baueinheit bildet. Die Kontaktierungseinrichtung 30 besitzt ein Gehäuse 32, welches fest mit der Metallmantelleitung 26 verbunden ist. Das Gehäuse 32 bildet hierzu einen Flansch 34 aus, durch den die Metallmantelleitung 26 in das Innere des Gehäuse 32 geführt ist. Das Gehäuse 32 kann beispielsweise aus einem Kunststoff bestehen, der auf die Metallmantelleitung 26 aufgespritzt ist. Nach einem weiteren Ausführungsbeispiel kann das Gehäuse 32 ein Metallgehäuse sein, welches mit der Metallmantelleitung 26 fest verbunden, beispielsweise verlötet oder verschweißt ist. Nach einem weiteren, nicht dargestellten Ausführungsbeispiel, ist das Gehäuse 32 mit der Metallmantelleitung 26 einstückig ausgebildet, das heißt, der äußere Metallmantel der Metallmantelleitung 26 erweitet sich zu dem Gehäuse 32. In jedem Fall ist gewährleistet, daß das Gehäuse 32 mit der Metallmantelleitung 26 fest und dichtend verbunden ist. Die Verbindung zwischen dem Gehäuse 32 und der Metallmantelleitung 26 ist hierbei so gewählt, daß sie den an der Verbindungstelle herrschenden Temperaturen standhält. Je nach Länge der Metallmantelleitung 26 , die nach verschiedenen Ausführungsbeispielen beispielsweise zwischen fünf und zwanzig cm betragen kann, herrschen an der Verbindungstelle zwischen dem Gehäuse 32 und der Metallmantelleitung 26 beispielsweise Temperaturen von ca. 150 °C.

Innerhalb des Gehäuse 32 sind die elektrischen Verbindungsleitungen 22 mit Kontaktstiften 36 elektrisch leitend verbunden. Eine Verbindung zwischen den elektrischen Verbindungsleitungen 22 und den Kontaktstiften 36 kann beispielsweise durch Verschweißen erfolgen. Darüber hinaus sind jedoch noch andere gängige Verbindungstechniken, beispielsweise Stecken, Wickeln, Löten usw. möglich.

Die Kontaktstifte 36 sind in einem Sockel 28, der aus einem Isoliermaterial, beispielsweise Kunststoff besteht, lagefixiert. Die Kontaktstifte 36 können beispielsweise nach dem Kontaktieren mit den elektrischen Verbindungsleitungen 22 in dem Sockel 38 eingegossen sein, indem über eine Öffnung 40 des Gehäuses 32 eine entsprechend Kunsststoffmasse eingebracht wird. Über die Lagefixierung der Kontaktstifte 36 in dem Sockel 38 wird gleichzeitig eine Anordnung der Kontaktstifte 36 in einem bestimmten Rastermaß erreicht. Wie in Figur 2 die Draufsicht auf die Öffnung 40 der Kontaktierungseinrichtung 30, entsprechend der Linie A-A aus Figur 1, zeigt, sind im gewählten Beispiel insgesamt vier Kontaktstifte 36 auf den Eckpunkten einen Quadrates angeordnet. Selbstverständlich ist jede beliebige andere Anordnung der Kontaktstifte 36 möglich, wenn die Voraussetzung erfüllt ist, daß die Kontaktstifte 36 in eine entsprechende - noch zu erläuternde - Gegensteckereinrichtung einführbar sind. Die Kontaktstifte 36 ragen mit ihren freien Enden in das Gehäuse 32 hinein, so daß die Kontaktierungseinrichtung 30 insgesamt eine Steckerkupplung 44 ergibt.

Wie Figur 2 zu entnehmen ist, ist im gezeigten Beispiel das Gehäuse 32 im wesentlichen rund ausgebildet. Nach weiteren, nicht dargestellten Ausführungsbeispielen, kann das Gehäuse 32 auch jede beliebige andere geometrische Form, beispielsweise eine ovale, eine rechteckige Form usw. aufweisen. Voraussetzung ist wiederum, daß ein entsprechender Gegenstecker mit der Form des Gehäuse 32 und der Anordnung der Kontaktstifte 36 korrespondiert. An seinem der Öffnung 40 zugewandten Ende besitzt das Gehäuse 32 eine Wulst 48, die das Einführen eines Gegensteckers erleichtert.

Der Sockel 38 kann eine Durchgangsöffnung 50 aufweisen, die einen Innenraum der Metallmantelleitung 26 mit eine Innenraum des Gehäuse 32 verbindet.

Durch diese Durchgangsöffnung 50, von der gegebenfalls auch mehrer vorgesehen sein können, ist eine Referenzgasverbindung zu dem Sensorelement 12 realisiert. Somit kann mittels der fest mit der Metallmantelleitung 26 verbundenen Kontaktierungseinrichtung 30 auch ein Sensorelement 12, das zu seinem Betrieb eine Luftreferenz benötigt, eingesetzt werden. Die Kontaktierungseinrichtung 30 ist somit insgesamt sehr variabel bei verschiedenen Arten von Sensorelementen 12 verwendbar.

Über die das Sensorelement 12 mit der Kontaktierungseinrichtung 30 verbindende Metallmantelleitung 26 ist eine hochtemperaturfeste Verbindung zwischen der Meßstelle der Meßeinrichtung, dem Sensorelements 12 und der Schnittstelle zu einer Auswerteschaltung, der Kontaktierungseinrichtung 30 geschaffen. Das zusätzliche Vorsehen irgendwelcher Isolierungen, Abdichtungen usw. ist nicht notwendig.

In der Figur 1 ist weiterhin eine Schnittdarstellung eines Gegenstecker 52 gezeigt. Der Gegenstecker 52 ist mit elektrischen Leitungen 54 verbunden, die beispielsweise Bestandteil eines fest in einem Kraftfahrzeug installierten Kabelbaums 56 sind. Der Gegenstecker 52 besitzt ein Steckergehäuse 58, dessen Außenkontur dem Gehäuse 32 der Kontaktierungseinrichtung 30 angepaßt ist. Sowohl das Gehäuse 32 als auch das Steckergehäuse 58 können hier nicht dargestellte Mittel, beispielsweise Vorsprünge und entsprechende Ausnehmungen aufweisen, die ein Einführen des Steckergehäuse 58 in das Gehäuse 32 nur in einer bestimmten Position gestattet.

In das Steckergehäuse 58 sind Kontaktbuchsen 60 eingelassen, beispielsweise eingerastet, in die die Kontaktstifte 36 der Kontaktierungseinrichtung 30 einführbar sind. Die Kontaktbuchsen 60 sind beispielsweise durch Verkrimpfen mit den Leitungen 54 elektrisch leitend verbunden. Innerhalb des Steckergehäuses 58 sind Ausnehmungen 62 ausgebildet, in die die Leitungen 54 geführt sind und in denen diese mit den Kontaktaktbuchsen 60 kontaktiert sind. Zum Abdichten sind die Leitungen 54 mit einer Dichtung 64 versehen, die einerseits eine Abdichtung der Verbindungsstelle der Kontaktstifte 36 mit den Kontaktbuchsen 60 bewirkt und andereseits eine Zugentlastung für die Leitungen 54 darstellt. In die Außenkontur des Steckergehäuses 58 ist eine weitere, umlaufende Dichtung 66 vorgesehen, die ein dichtes Anliegen des Steckergehäuse 58 an dem Gehäuse 32 gewährleistet.

Insgesamt ist mit der Meßeinrichtung 10, die aus dem Sensorelement 12, der Schutzeinrichtung 24 und der mit der Schutzeinrichtung 24 verbundenen Kontaktierungseinrichtung 30 besteht, eine kompakte und robuste Einheit geschaffen, die auch unter extremen Einbaubedingungen, beispielsweise im Motorraum eines Kraftfahrzeuges alle Anforderungen an ein sicheres und beständiges Kontaktieren des Sensorelements 12 gewährleisten. Durch Heranführen des Kabelbaums 56 über den Gegenstecker 52 an die Meßeinrichtung 10 ist eine vereinfachte Montage möglich.

## Patentansprüche

1. Messeinrichtung, insbesondere elektrochemischer Messfühler, mit einem an einer Messstelle angeordneten Sensorelement, das: in einem metallischen Gehäuse angeordnet ist und das über elektrische Verbindungsleitungen mit einer messstellenfernen Auswerteschaltung verbindbar ist, wobei eine Schutzeinrichtung die elektrischen Verbindungsleitungen aufnimmt, sodass die elektrischen Verbindungsleitungen zumindest in der Nähe der Messstelle gegen äußere Einflüsse, insbesondere gegen Hochtemperatureinflüsse, geschützt geführt sind, wobei die Schutzeinrichtung (24) eine Metallmantelleitung (26) ist, wobei die Metallmantelleitung (26) an das Gehäuse (16) des Sensorelements (12) anschließt und wobei an dem dem Sensorelement (12) abgewandten Ende der Metallmantelleitung (26) einen Kontaktierungseinrichtung (30) vorgesehen ist, die mit einer Verbindungsleitung (54, 56) zu der Auswerteschaltung kontaktierbar ist, **dadurch gekennzeichnet, dass** die Metallmantelleitung eine rechtwinklige Biegung aufweist.

2. Meßeinrichtung nach Anspruch 1, **dadurch gekennzeichnet, daß** die Kontaktierungseinrichtung (30) von einer Steckerkupplung (44) gebildet wird, die fest mit der Schutzeinrichtung (24) verbunden ist.

3. Meßeinrichtung nach einem der vorhergehenden Ansprüche, **dadurch gekennzeichnet, daß** das meßstellenferne Ende der Metallmantelleitung (26) in der Steckerkupplung (44) mündet.

4. Meßeinrichtung nach einem der vorhergehenden Ansprüche, **dadurch gekennzeichnet, daß** die Steckerkupplung (44) ein Gehäuse (32) aufweist, das mit der Metallmantelleitung (26) fest verbunden ist.

5. Meßeinrichtung nach einem der vorhergehenden Ansprüche, dadurch erhältlich, daß das Gehäuse (32) an die Metallmantelleitung (26) angespritzt ist.

6. Meßeinrichtung nach einem der vorhergehenden Ansprüche, **dadurch gekennzeichnet, daß** die Verbindung zwischen dem Gehäuse (32) und der Metallmantelleitung (26) eine Schweißverbindung ist.

7. Meßeinrichtung nach einem der vorhergehenden Ansprüche, **dadurch gekennzeichnet, daß** das Gehäuse (32) mit der Metallmantelleitung (26) einstückig ausgebildet ist.

8. Meßeinrichtung nach einem der vorhergehenden Ansprüche, **dadurch gekennzeichnet, daß** die elektrischen Verbindungsleitungen (22) mit innerhalb des Gehäuses (32) angeordneten Kontaktstiften (36) verbunden sind.

9. Meßeinrichtung nach einem der vorhergehenden Ansprüche, dadurch erhältlich, daß die Kontaktstifte (36) in einem innerhalb des Gehäuses (32) angeordneten Isolierstoffsockel (38) eingespritzt sind.

10. Meßeinrichtung nach einem der vorhergehenden Ansprüche, **dadurch gekennzeichnet, daß** der Isolierstoffsockel (38) wenigstens eine Durchgangsöffnung (50) aufweist, die einen Innenraum der Metallmantelleitung (26) mit der Atmosphäre oder einer mit der Atmosphäre verbundenen Zuleitung verbindet.

11. Meßeinrichtung nach einem der vorhergehenden Ansprüche, **dadurch gekennzeichnet, daß** das Gehäuse (32) Mittel aufweist, die ein polrichtiges Kontaktieren der Kontaktstifte (36) zwingend erfordern.

12. Meßeinrichtung nach einem der vorhergehenden Ansprüche, **dadurch gekennzeichnet, daß** die Schutzeinrichtung (24) dichtend mit dem Gehäuse (16) des Sensorelements (12) verbunden ist.

13. Meßeinrichtung nach einem der vorhergehenden Ansprüche, **dadurch gekennzeichnet, daß** das Gehäuse (16) des Sensorelements (12) in einer Durchgangsöffnung eines Abgasrohres angeordnet und mit einem Befestigungsmittel, insbesondere einer Überwurfmutter (18), festgelegt ist.

14. Meßeinrichtung nach einem der vorhergehenden Ansprüche, **dadurch gekennzeichnet, daß** innerhalb des Gehäuses (16) des Sensorelements (12) Elektroden, ein Festelektrolytkörper sowie eine Heizeinrichtung angeordnet sind.

## Claims

1. Measuring device, in particular electrochemical measuring probe, with a sensor element which is arranged in a metallic housing at a measuring point and can be connected to an evaluation circuit remote from the measuring point by means of electrical connecting lines, a protective device receiving the electrical connecting lines, so that the electrical connecting lines are routed in such a way that they are protected against external influences, in particular against high-temperature influences, at least in the vicinity of the measuring point, the protective device (24) being a metal sheathed line (26), the metal sheathed line (26) being connected to the housing (16) of the sensor element (12) and a contacting device (30) being provided at the end of the metal sheathed line (26) remote from the sensor element (12) and able to make contact with the evaluation circuit by a connecting line (54, 56), **characterized in that** the metal sheathed line has a right-angled bend.

2. Measuring device according to Claim 1, **characterized in that** the contacting device (30) is formed by a plug coupling (44) which is firmly connected to the protective device (24).

3. Measuring device according to one of the preceding claims, **characterized in that** the end of the metal sheathed line (26) remote from the measuring point opens out in the plug coupling (44).

4. Measuring device according to one of the preceding claims, **characterized in that** the plug coupling (44) has a housing (32) which is firmly connected to the metal sheathed line (26).

5. Measuring device according to one of the preceding claims, **characterized in that** the housing (32) is moulded onto the metal sheathed line (26).

6. Measuring device according to one of the preceding claims, **characterized in that** the connection between the housing (32) and the metal sheathed line (26) is a welded connection.

7. Measuring device according to one of the preceding claims, **characterized in that** the housing (32) is formed in one piece with the metal sheathed line (26).

8. Measuring device according to one of the preceding claims, **characterized in that** the electrical connecting lines (22) are connected to contact pins (36) arranged inside the housing (32).

9. Measuring device according to one of the preceding claims, **characterized in that** the contact pins (36) are moulded in an insulating-material socket (38) arranged inside the housing (32).

10. Measuring device according to one of the preceding claims, **characterized in that** the insulating-material socket (38) has at least one through-opening (50), which connects an interior space of the metal sheathed line (26) to the atmosphere or to a supply line connected to the atmosphere.

11. Measuring device according to one of the preceding claims, **characterized in that** the housing (32) has means which necessitate correct-pole contacting of the contact pins (36).

12. Measuring device according to one of the preceding claims, **characterized in that** the protective device (24) is connected in a sealing manner to the housing (16) of the sensor element (12).

13. Measuring device according to one of the preceding claims, **characterized in that** the housing (16) of the sensor element (12) is arranged in a through-opening of an exhaust-gas pipe and is fixed by a fastening means, in particular a union nut (18).

14. Measuring device according to one of the preceding claims, **characterized in that** electrodes, a solid electrolyte body and a heating device are arranged inside the housing (16) of the sensor element (12).

## Revendications

1. Dispositif de mesure, en particulier sonde électrochimique, avec un élément de capteur placé sur un point de mesure qui est placé dans un boîtier métallique et peut être relié à un circuit d'évaluation éloigné du point de mesure au moyen de lignes électriques, une installation de protection recevant les lignes de liaison électriques de sorte que les lignes de liaison électriques sont guidées au moins à proximité du point de mesure en étant protégées des influences extérieures, en particulier des influences des hautes températures, l'installation de protection (24) étant une la ligne gainée de métal (26) se raccordant au boîtier (16) de l'élément de capteur (12), avec une installation de mise en contact (30) qui peut être mise en contact avec un circuit d'évaluation au moyen d'une ligne de liaison (54, 56) et prévue sur l'extrémité détournée de l'élément de capteur (12), de la ligne gainée de métal (26),
**caractérisé en ce que**
la ligne gainée de métal présente une courbure en angle droit.

2. Dispositif de mesure selon la revendication 1,
**caractérisé en ce que**
l'installation de mise en contact (30) est formée par un couplage de connecteur (44) qui est lié à demeure à l'installation de protection (24).

3. Dispositif de mesure selon l'une des revendications précédentes,
**caractérisé en ce que**
l'extrémité à distance du point de mesure de la ligne gainée de métal (26) débouche dans le couplage de connecteur (44).

4. Dispositif de mesure selon l'une des revendications précédentes,
**caractérisé en ce que**
le couplage de connecteur (44) présente un boîtier (32) qui est lié à demeure à la ligne gainée de métal (26).

5. Dispositif de mesure selon l'une des revendications précédentes,
**caractérisé en ce qu'**
on peut obtenir en moulant par injection le boîtier (32) sur la ligne gainée de métal (26).

6. Dispositif de mesure selon l'une des revendications précédentes,
**caractérisé en ce que**
la liaison entre le boîtier (32) et la ligne gainée de métal (26) est un assemblage par soudure.

7. Dispositif de mesure selon l'une des revendications précédentes,
**caractérisé en ce que**
le boîtier (32) est formé d'une seule pièce avec la ligne gainée de métal (26).

8. Dispositif de mesure selon l'une des revendications précédentes,
**caractérisé en ce que**
les conduites de liaison électriques (22) sont liées à des fiches de contact (36) placées à l'intérieur du boîtier (32).

9. Dispositif de mesure selon l'une des revendications précédentes,
**caractérisé en ce qu'**
on peut obtenir en moulant par injection les fiches de contact (36) dans un culot en matière isolante (38) placé à l'intérieur du boîtier (32).

10. Dispositif de mesure selon l'une des revendications précédentes,
**caractérisé en ce que**
le culot en matière isolante (38) présente au moins une ouverture de passage (50) qui relie un espace intérieur de la ligne gainée de métal (26) avec l'atmosphère ou avec une ligne d'amenée liée à l'atmosphère.

11. Dispositif de mesure selon l'une des revendications précédentes,
**caractérisé en ce que**
le boîtier (32) présente des moyens qui exigent absolument un contact des fiches de contact (36) exact quant aux pôles.

12. Dispositif de mesure selon l'une des revendications précédentes,
**caractérisé en ce que**
l'installation de protection (24) est reliée de façon étanche au boîtier (32) de l'élément de capteur (12).

13. Dispositif de mesure selon l'une des revendications précédentes,
**caractérisé en ce que**
le boîtier (16) de l'élément de capteur (12) est placé dans une ouverture de passage d'un tuyau d'échappement et est maintenu avec un moyen de fixation, en particulier un écrou d'accouplement (18).

14. Dispositif de mesure selon l'une des revendications précédentes,
**caractérisé en ce qu'**
à l'intérieur du boîtier (16) de l'élément de capteur (12) sont placées des électrodes, un corps électrolytique fixe ainsi qu'une installation de chauffage.
